# EUROPEAN PATENT APPLICATION

(11) **EP 4 818 089 A1**
(43) Date of publication of application: **07.10.2026**
(21) Application number: 26159671.2
(22) Date of filing: 19.02.2026
(51) Int. Cl.: B65G 69/00, B65G 69/28

(54) **WHEEL-BLOCKING DEVICE AND METHOD**

(30) Priority: 01.04.2025 BE 202505201
(71) Applicant: Tecsi SA, 1082 Berchem-Sainte-Agathe (BE)
(72) Inventor: El Gouraini, Karim, 1082 Berchem-Sainte-Agathe (BE)
(74) Representative: Brantsandpatents bv

(57) **Abstract**

The invention relates to a wheel-blocking device for immobilising a vehicle at a loading dock (4). The device comprises an elongate guide structure (2) guiding a chock carriage along a longitudinal axis adjacent a rear wheel, a wheel chock (6) on the carriage movable transversely between a retracted position and a blocking position, a wheel-position sensor (5), and a hydraulic drive system (8, 12) for moving the carriage longitudinally and the wheel chock transversely. A hydraulic pressure sensor (22) detects initial contact between the wheel chock and the wheel and is arranged to trigger at least partial retraction of the wheel chock upon said contact. A control unit performs an iterative contact/partial-retraction sequence until the wheel chock is positioned closely around the wheel, and then retracts the chock carriage longitudinally to press the wheel chock against the wheel, thereby blocking vehicle movement.

## Description

### FIELD OF THE INVENTION

The present invention pertains to the technical field of mechanical loading dock systems, particularly to devices and methods for ensuring safe and stable positioning of vehicles during cargo transfer.

The present invention relates more in particular to a device for blocking the wheels of a vehicle at a loading dock in order to immobilise the vehicle during loading or unloading operations. In a second aspect, the present invention also relates to a method for preventing unintended vehicle movement by using such a wheel-blocking device. In a last aspect, the present invention further relates to a kit or system for integrating the wheel-blocking device into existing loading dock setups.

### BACKGROUND OF THE INVENTION

The present invention builds upon existing truck blocking devices, refining and improving its functionality. Such systems ensure that the truck remains stationary at the dock during cargo transfer, preventing unintended movement.

EP 0684915 describes a system for blocking wheels of a vehicle using elongate guide members and a wheel block carrier, wherein the carrier can move longitudinally and the wheel block can move transversely to engage against a truck wheel. WO 2017/021640 describes a wheel-blocking system for a loading dock with a longitudinally movable chock carriage, a transversely movable wheel chock and sensor-assisted positioning relative to a vehicle wheel.

These known devices do not have certain features that allow for more precise detection of the wheel position, nor do they address potential damage to wheel arches or mudguards arising from higher wheel chocks. In particular, they are not fully suited to accommodate taller chocks that improve blocking performance without causing damage to truck components. They also lack some refinements in the wheel-detection mechanism and user feedback signals for guiding the driver and operator.

The present invention aims to resolve at least some of the problems and disadvantages mentioned above. The invention for this purpose aims to provide a wheel-blocking device and related method that enable more precise positioning of a taller wheel chock, improved detection and control through a "touch and block" principle, and better communication with the vehicle driver regarding blocking status.

There remains a need in the art for an improved wheel-blocking system that effectively secures vehicles at a loading dock while minimizing the risk of damage and ensuring ease of use. Accordingly, a need arises for a wheel-blocking solution that integrates enhanced detection, improved safety, and clear signalling.

### SUMMARY OF THE INVENTION

The present invention and its embodiments aim to address one or more of the aforementioned issues by introducing a novel wheel-blocking device for immobilising a vehicle at a loading dock, along with a method of using this device.

In a first aspect, the invention relates to a wheel-blocking device for immobilising a vehicle at a loading dock according to claim 1.

This arrangement can improve blocking reliability compared with known systems in which the carriage stop position and the initial chock approach rely largely on manual alignment and a single, potentially abrupt engagement. By combining a wheel-position sensor for establishing a defined carriage position relative to the wheel with pressure-based detection of first contact during transverse movement, the control unit can bring the wheel chock into close conformity with the wheel in a controlled manner. The contact-triggered partial retraction can limit peak forces at first engagement and thereby help avoid damage to the wheel and nearby vehicle structures, for example mudguards or wheel arches, particularly where clearance is limited and/or a relatively tall wheel chock is used. The final longitudinal carriage movement then provides a secure press of the chock against the wheel, while the preceding controlled positioning steps can reduce the likelihood of mispositioning or harsh impacts.

In an aspect, the invention also relates to a method of blocking a vehicle's rear wheel at a loading dock according to claim 10.

This sequence can reduce trial-and-error during positioning compared with procedures in which the chock is simply driven toward the wheel until blocked or manually judged to be in place. The wheel-position signal may be used to stop the carriage at a repeatable longitudinal reference relative to the wheel before transverse engagement begins. During the transverse approach, detecting initial contact by hydraulic pressure and performing at least partial retraction can provide a controlled "settling" behaviour, allowing the chock to be brought close to the wheel while helping avoid damage that may arise from a single forceful push or misalignment. Repeating the approach/partial-retraction cycle can accommodate variation in wheel size and shape and can support consistent engagement before the carriage is retracted longitudinally to press the chock against the wheel for immobilisation.

In addition, the present invention contemplates a kit or use for integrating the above device into existing loading docks, wherein relevant hardware, software and instructions are supplied in packaged form to facilitate installation and retrofit.

Taken together, these features address shortcomings in prior art systems. They yield a method and device that offer better wheel-position detection, careful contact and retraction to avoid damage, a taller chock for more secure blocking, and a user-friendly interface for safer and more efficient loading dock operations.

### DETAILED DESCRIPTION OF THE INVENTION

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:
"Touch & Block" refers to the central part of the invention, i.e. a control principle wherein the wheel chock is moved into contact with the vehicle's wheel until a specific pressure threshold is detected, indicating that the chock has just "touched" the wheel. Upon this initial contact, the system automatically partially retracts the wheel chock to avoid excessive or abrupt force against the wheel or its surrounding components. The chock then re-approaches the wheel in one or more incremental steps, each time retracting again upon reaching the contact threshold. This iterative touch-retract-re-approach cycle ensures the wheel chock settles closely around the wheel tread with minimal clearance, thereby achieving a secure block without risking damage to mudguards, wheel arches, or other vehicle components. The current "Touch & Block" system employs an electrohydraulic mechanism to precisely position the chock near the wheel, ensuring secure blocking without physical damage to truck components.

In the present disclosure, the term "sensor" refers to a wheel-position sensor configured to provide a wheel-position detection signal, whereas the term "pressure sensor" refers to a hydraulic pressure sensor configured to detect a pressure increase.

"A", "an", and "the" as used herein refers to both singular and plural referents unless the context clearly dictates otherwise. By way of example, "a compartment" refers to one or more than one compartment.

"About" as used herein referring to a measurable value such as a parameter, an amount, a temporal duration, and the like, is meant to encompass variations of +/-20% or less, preferably +/-10% or less, more preferably +/-5% or less, even more preferably +/-1% or less, and still more preferably +/-0.1% or less of and from the specified value, in so far such variations are appropriate to perform in the disclosed invention. However, it is to be understood that the value to which the modifier "about" refers is itself also specifically disclosed.

"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

Furthermore, the terms first, second, third and the like in the description and in the claims, are used for distinguishing between similar elements and not necessarily for describing a sequential or chronological order, unless specified. It is to be understood that the terms so used are interchangeable under appropriate circumstances and that the embodiments of the invention described herein are capable of operation in other sequences than described or illustrated herein.

The recitation of numerical ranges by endpoints includes all numbers and fractions subsumed within that range, as well as the recited endpoints.

The expression "% by weight", "weight percent", "%wt" or "wt%", here and throughout the description unless otherwise defined, refers to the relative weight of the respective component based on the overall weight of the formulation.

Whereas the terms "one or more" or "at least one", such as one or more or at least one member(s) of a group of members, is clear per se, by means of further exemplification, the term encompasses inter alia a reference to any one of said members, or to any two or more of said members, such as, e.g., any ≥3, ≥4, ≥5, ≥6 or ≥7 etc. of said members, and up to all said members.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the following, any of the embodiments can be used in any combination.

In a first aspect, the invention relates to a wheel-blocking device for immobilising a vehicle at a loading dock, comprising an elongate guide structure configured to guide a chock carriage along a longitudinal axis adjacent a rear wheel of the vehicle, a wheel chock mounted on the chock carriage and arranged for transverse movement between a retracted position and a blocking position, a sensor arranged to detect a position of the vehicle's rear wheel, a hydraulic drive system arranged to move (i) the chock carriage along the longitudinal axis and (ii) the wheel chock transversely, a pressure sensor arranged to detect an initial contact between the wheel chock and the vehicle's wheel, and a control unit configured to control said hydraulic drive system. The pressure sensor is arranged to trigger at least partial retraction of the wheel chock upon detection of said initial contact, and the control unit is configured to iteratively move the wheel chock into contact with the wheel and partially retract the wheel chock until it is positioned closely around the wheel, and to retract the chock carriage longitudinally to press the wheel chock against the wheel, thereby blocking vehicle movement.

This arrangement allows for precise immobilisation of the vehicle wheel by automatically gently detecting first contact, retracting slightly to avoid excess force, and then re-approaching the wheel in small increments. It ensures a tight fit around the wheel's circumference without risking damage to mudguards, the wheel itself or other components. The final longitudinal movement of the chock carriage securely presses the chock against the wheel, thereby blocking vehicle movement.

In embodiments, wheel detecting sensor techniques include optical sensors, such as a laser sensor that cooperates with a polarised reflector on an opposite guide member. In an embodiment, the sensor comprises an ultrasonic sensor arranged to emit an ultrasonic signal and to receive a corresponding return signal, from which a distance and/or presence of the wheel is derived, thereby enabling the control unit to infer a wheel position and to stop or position the carriage accordingly. The sensor may be oriented to detect a transition between free space and the wheel surface and to output a wheel-detection signal when a predefined distance criterion is met. Further non-limiting examples of sensing techniques include inductive sensors, capacitive sensors, magnetic sensors, radar-based sensors, camera-based systems, or combinations thereof, provided that the control unit receives a detection signal suitable for positioning the carriage relative to the wheel. Sensor techniques can be chosen based on the required detection distance and resolution, wheel surface and material properties, and environmental and weather influences such as dirt, water, spray, ice or particulate matter, as well as susceptibility to impact and ease of cleaning or replacement.

By providing a wheel-position detection signal to the control unit, the sensor supports automatic or semi-automatic longitudinal positioning of the chock carriage relative to the wheel before the wheel chock is advanced transversely. This can reduce dependence on manual alignment, can shorten the positioning phase, and can improve repeatability of the initial carriage stop position.

In an embodiment of the invention the sensor is configured to detect a lateral edge of the vehicle's wheel. Detecting a lateral edge provides a distinct positional reference for generating the wheel-detection signal used to stop or position the chock carriage along the longitudinal guide. This facilitates establishing a defined longitudinal relationship between the carriage and the wheel prior to initiating the transverse movement of the wheel chock.

The sensor may be mounted at any suitable location on the wheel-blocking device, including behind the wheel chock so as to detect the wheel from a rear side of the chock. Positioning the sensor behind the chock protects it from direct impacts, debris, or spray. It allows the chock structure itself to shield the sensor, thereby increasing the sensor's longevity and reliability in harsh loading dock environments.

In another preferred embodiment of the invention the control unit includes a variable-speed drive that regulates a flow rate of hydraulic fluid for controlling movement of the chock carriage and/or the wheel chock.

Regulating hydraulic flow via a variable-speed drive allows faster motion when distant from the wheel and slower, more controlled approaches near contact, minimizing abrupt impacts. This feature increases the overall efficiency of the blocking process and reduces wear on mechanical components. In embodiments, the hydraulic flow regulation results in a configurable time of motion.

In embodiments, by accurately locating the side edge of the wheel, the system can stop the carriage at the correct longitudinal position and move back slightly, according to the configurable time, to begin the sensing operation at the most suitable location based on the different wheel diameters.

In yet another preferred embodiment of the invention a visible indicator light is mounted on or near the chock carriage, the indicator light being configured to display a first color during blocking and a second color when the wheel chock is retracted to permit departure of the vehicle.

Incorporating a visible indicator light on or near the carriage provides clear feedback to drivers and dock personnel, signaling whether the system is in a blocked or retracted state. This reduces the chance of accidental truck movements when the chock is engaged.

In a preferred embodiment the wheel chock has a height of at least 470 mm.

A taller chock profile offers a more robust physical barrier against the tire, diminishing the risk of the truck rolling over the chock. It also suits a broader range of wheel sizes and designs, thereby increasing safety. The use of a 470mm-high wheel chock prevents also accidental or intentional truck departure while avoiding damage to mudguards.

In another preferred embodiment of the invention the control unit is programmed to repeat a contact-retraction cycle multiple times until the wheel chock is positioned with minimal clearance around the circumference of the wheel.

By repeatedly detecting contact and retracting, the system ensures the chock ends up very close to the wheel's surface with minimal space in between, greatly enhancing blocking stability and reducing the likelihood of damage to vehicle components.

In another preferred embodiment of the invention one or more limit switches arranged to detect a transverse end position of the wheel chock are provided.

Incorporating limit switches allows the control unit to identify the chock's final transverse position, safeguarding against overextension and ensuring that each motion of the chock remains within safe mechanical limits.

In another preferred embodiment of the invention the elongate guide structure comprises a ground-mounted rail and the chock carriage comprises a housing slidably engaged with said rail.

A ground-mounted rail furnishes a stable and low-profile guide for the chock carriage. This configuration simplifies installation, aligns consistently with the truck's wheel, and eliminates the need for overhead or complex subterranean assemblies.

The invention further relates to a method of blocking a vehicle's rear wheel at a loading dock, comprising the steps of (a) providing a longitudinal guide adjacent the vehicle's rear wheel, (b) moving a carriage along the longitudinal guide so that a wheel chock carried thereby can be positioned opposite the wheel, and (c) detecting an initial contact between the wheel chock and the wheel with a pressure sensor. The method further comprises (d) automatically retracting the wheel chock at least partially upon detecting said contact, (e) repeating the steps of approaching and partially retracting the wheel chock until it is positioned closely around the wheel, and (f) moving the carriage longitudinally to press the wheel chock against the wheel, thereby immobilising the vehicle.

This sequence ensures safe and adaptive engagement of the chock with the wheel. By partially retracting on first contact, damage from excessive force is prevented. Incremental re-approach cycles result in optimal positioning of the chock, and the final longitudinal motion secures the wheel firmly in place.

In an embodiment, the carriage is longitudinally positioned relative to the wheel using a wheel-position detection signal provided by a sensor, and the movement of the carriage along the longitudinal guide is halted (or otherwise controlled) when the sensor indicates that a predetermined longitudinal relationship between the carriage and the wheel has been reached. Providing such a wheel-position detection signal can reduce reliance on manual alignment and can improve repeatability of the carriage stop position.

In an embodiment, the wheel-position detection signal is generated based on detection of a lateral edge of the wheel. Detecting a lateral edge provides a distinct positional reference that can be used by the control unit for stopping or positioning the carriage along the longitudinal guide before initiating the transverse movement of the wheel chock.

Another preferred embodiment of the method regulates a flow rate of hydraulic fluid with a variable-speed drive to adjust the approach speed of the wheel chock during the steps of approaching and partially retracting.

Varying hydraulic flow rate ensures efficient movement across larger distances while slowing down near contact. This approach reduces mechanical wear and helps avoid sudden or forceful impacts when the chock nears the wheel.

Preferably a visible indicator light is switched to a first color while the wheel chock is in a blocking position and to a second color when the wheel chock is fully retracted.

Providing real-time visual feedback alerts both driver and operator to the blocking status. This measure helps avoid accidental operation of the vehicle when the chock is engaged or is in the process of retracting.

The preferred method further comprises the step of detecting a transverse end position of the wheel chock with a limit switch before pressing the wheel chock against the wheel.

Ensuring the chock is at a safe and fully extended or retracted transverse position prior to applying longitudinal force prevents overextension and preserves device integrity, thus reducing maintenance.

The preferred method further comprises the step of releasing the vehicle by moving the carriage away from the wheel and retracting the wheel chock transversely until the wheel is free, and then signaling the operator that the vehicle may depart.

This final step affords a straightforward and safe release procedure, minimizing the risk of partial or incomplete retraction. It also provides clear communication that the vehicle is now free to exit.

The wheel-blocking device may be provided as a retrofit kit or system for integrating the device into an existing loading dock setup. The kit may comprise at least the elongate guide structure, the chock carriage with the wheel chock, the wheel-position sensor, the pressure sensor, the hydraulic drive components and a control unit configured to execute the Touch & Block control. The kit may further include mounting hardware, wiring and/or hoses, and installation instructions for fitting the guide rail, connecting the electrohydraulic actuators, and configuring the control unit for a given dock layout.

The following stepwise preferred operation, consistent with claims 10 to 15, ensures the method of blocking a vehicle wheel is both safe and efficient.

When no vehicle is present, the wheel chock remains in a rest position with the visible indicator light showing the second color or "retracted" state. Once the vehicle backs into position, the operator activates the securing process per step (a) of claim 10, providing a longitudinal guide adjacent the rear wheel. Step (b) involves moving the carriage along the rail until the wheel chock is generally opposite the wheel. A sensor then provides a wheel-position detection signal, causing the carriage movement to halt.

Once halted, step (c) of claim 10 takes place as the pressure sensor begins monitoring the initial contact between the wheel chock and the wheel. In line with step (d), upon detecting this contact, the system automatically retracts the wheel chock partially to avoid a harsh collision. The control unit, potentially assisted by a variable-speed drive to regulate hydraulic flow per claim 12, allows faster motion when no contact is detected and slower, more careful approach when close to the wheel.

By step (e), the control unit can repeat the approach-retraction cycle multiple times, ensuring minimal clearance around the circumference of the wheel in accordance with claims 7 and 10(e). The "Touch & Block" logic prevents the wheel chock from forcing itself too aggressively on the wheel while still achieving a secure final position that can accommodate different tire sizes and shapes.

Finally, step (f) involves pulling the carriage longitudinally to press the wheel chock against the wheel, as specified in claim 10. This final pressing motion completes the blocking action, holding the vehicle firmly in place. The visible indicator light switches to the first color, indicating that the wheel chock is in a blocking state per claim 5 or claim 13. During loading or unloading, the vehicle remains immobilised in this manner.

When the operation concludes, the operator presses the release button, triggering a reversal of the blocking steps as set forth in claim 15. The carriage is moved away from the wheel and the wheel chock is retracted transversely. Limit switches described in claim 8, if installed, help ensure the wheel chock is correctly returned to its retracted position. Once the wheel chock is fully retracted, the system color signal reverts to the second color, indicating a free state. The vehicle can then safely depart.

Additional benefits of the invention reside from the sensor positioned at the rear of the wheel chock rather than in line with the wheel chock's transverse movement, improving detection stability, durability and accuracy. The use of a variable-speed drive enables precise wheel chock positioning by regulating hydraulic flow. A hydraulic pressure sensor allows for real-time tactile sensing during the transverse movement of the wheel chock, improving response and safety. Software-controlled hydraulic "palpation" progressively moves the wheel chock into position without excessive force, ensuring safe and effective blocking.

### DESCRIPTION OF THE FIGURES

In order to illustrate the properties of the invention without limiting its potential applications, reference is made below to specific embodiments shown in the accompanying figures. These embodiments demonstrate how the device and method, as specified in the claims, provide a reliable solution for immobilising a vehicle at a loading dock, preventing unintended movement during loading or unloading.

The invention is based on a wheel-blocking device whose operation follows the principles set forth in claim 1. When a truck (1) approaches a loading dock (4), the system ensures that the truck's position remains fixed by detecting and blocking one of the rear wheels (3). This overall arrangement not only increases safety but also streamlines logistics by preventing any accidental forward or backward rolling of the truck.

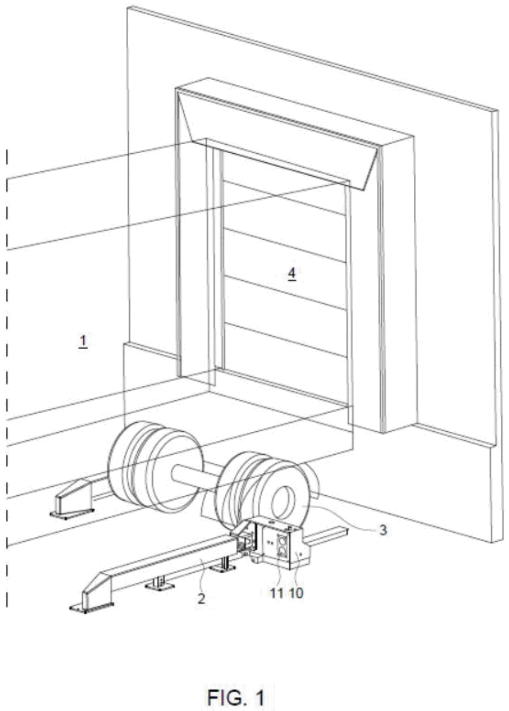

Figure 1 presents a general side view of the mechanism often referred to as "Touch & Block." According to claim 1, there is an elongate guide structure mounted on the ground near the loading dock (4). A chock carriage traverses this guide structure along a longitudinal axis parallel to the truck's orientation. The carriage accommodates a wheel chock (6) for transverse movement, allowing it to be retracted or placed in a blocking position against the rear wheel (3). A sensor (5) detects the wheel's position, feeding information to a control unit that, in combination with a pressure sensor in the hydraulic drive circuit, carries out the contact-retraction cycles embodied in the Touch & Block principle.

The wheel chock housing (10) in Figure 1 is provided with a visible indicator light (11) that can show different colors (for example red or green), fulfilling the feature of claim 5. The truck driver can see at a glance whether the system is in a blocking state or is fully retracted.

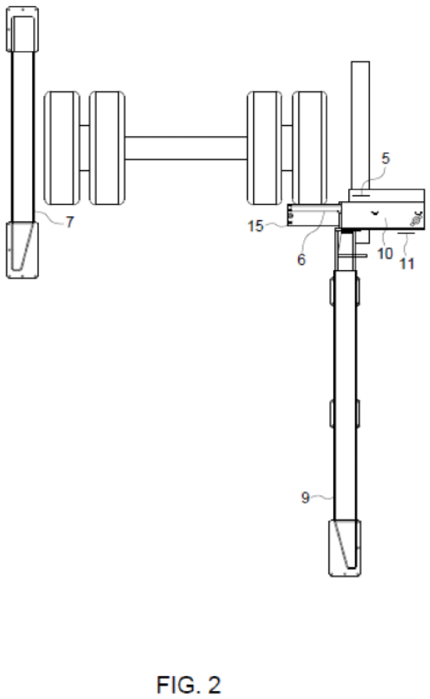

Figure 2 offers a sectional view (marked as section A at a chosen scale) illustrating how the wheel chock shoe (6) is aligned for movement toward the truck's rear wheel (3). In accordance with claim 6, the shoe can be at least 470 mm in height, which ensures more robust engagement and reduces the risk of the vehicle rolling over the chock. In the illustrated embodiment, a sensor (5), implemented here as a laser sensor cooperating with a polarised reflector arranged on an opposite wheel guide (7), is used to achieve precise detection of the wheel's edge. This arrangement allows the system to halt longitudinal movement at an optimal position and prepares for the subsequent transverse approach. By mounting the sensor behind the chock, as stated in claim 3, it is safeguarded against dirt and direct impact.

In this figure, the hydraulic actuator frame (9) is visible, supporting the main hydraulic cylinder (8) responsible for longitudinal movement of the chock carriage. Another hydraulic cylinder (12) moves the chock shoe (6) transversely, enabling the repeated contact-retraction cycles whenever the pressure sensor registers initial contact, which is pivotal to the Touch & Block concept of claim 1.

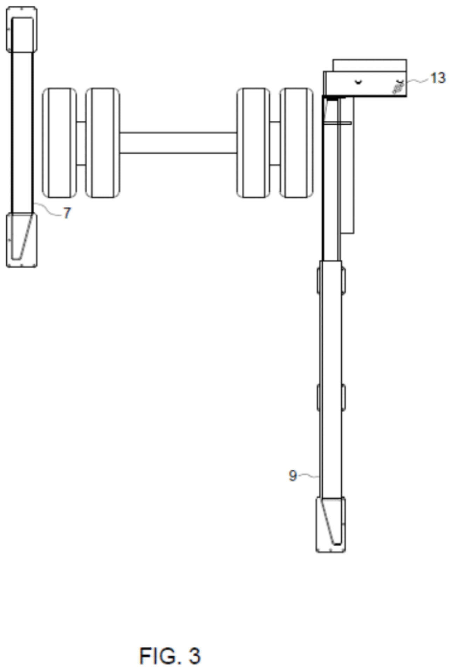

Figure 3 provides an exploded perspective showing individual components of the system before assembly. The guide and centering assemblies (9, 7) help align the truck in reverse by forming part of the elongate guide structure mentioned in claim 9. The wheel chock housing (10) is fixed to a carriage that is slidably engaged with the rail, permitting longitudinal displacement by the main hydraulic cylinder (8). The cylinder (12) ensures lateral or transverse motion of the chock shoe (6). The indicator light (11) here provides red-green signaling for clarity, consistent with claims 5 and 13. During assembly, one or more limit switches (23 & 24) may be installed to detect the transverse end position of the chock, in line with claim 8.

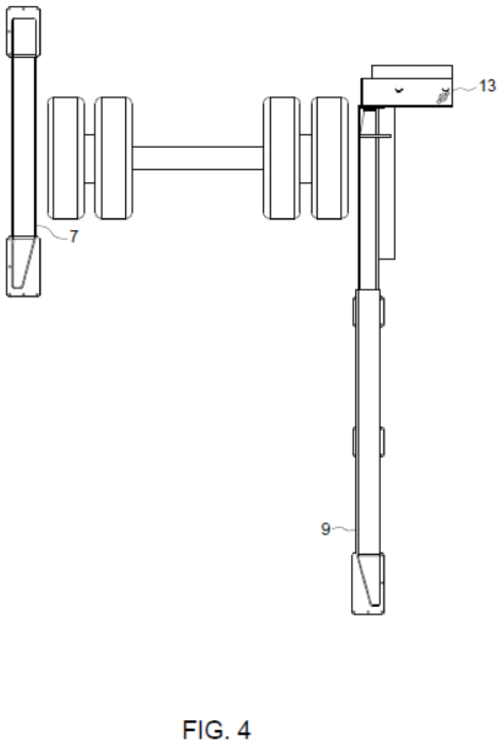

Figure 4 explains an embodiment of the actuation mechanism, focusing on how the blocking function is triggered and controlled. In the rest position (13), the device remains near the facade, showing a green or "free" signal on the indicator light (11). As the truck (1) moves along the rolling path (14) toward the dock (4), the actuation control (15) guides the wheel chock housing (10). When the sensor (5) detects the wheel's edge, the system halts longitudinal motion at position (16) and moves back slightly according to a configurable time. This partial automation reduces time and manual effort needed to position the chock accurately.

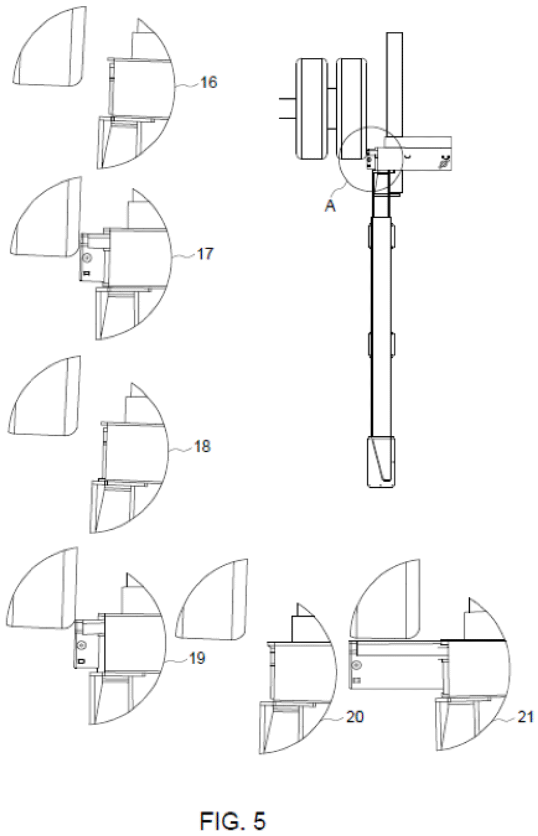

Figure 5 shows sequential states (16 through 21), detailing how the Touch & Block system operates in iterative steps. At (16), the carriage stops once the wheel is detected. At (17), the transverse cylinder (12) begins pushing the chock shoe (6) toward the wheel. If immediate contact is sensed by the pressure sensor, as claimed in claim 1, the system retracts slightly to prevent a forceful collision. It then readvances at (18) and (19) until the chock surpasses the wheel edge at (20). This cyclical approach continues in accordance with claim 7, ensuring the chock is ultimately positioned with minimal clearance around the wheel circumference, mitigating damage to mudguards. The main cylinder (8) then retracts longitudinally at (21), pressing the chock against the wheel, thus immobilising the vehicle and satisfying the final step of claim 1.

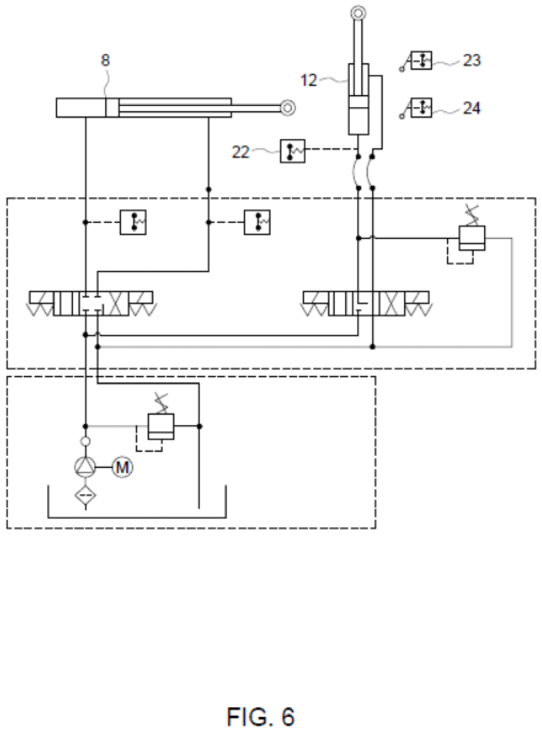

Figure 6 shows, in one exemplary embodiment, a hydraulic schematic in which a motor-driven pump supplies pressurised fluid through a main line connected to two directional control valves. The first directional control valve regulates the longitudinal cylinder (8), which moves the chock carriage along the guide rail. The second directional control valve drives the transverse cylinder (12), which is responsible for moving the wheel chock from its retracted position into a blocking position.

A relief valve is placed upstream of the valves to protect the circuit from excessive pressure. Downstream, a pressure sensor (22) is arranged to detect the rise in hydraulic pressure when the chock shoe meets the vehicle's wheel (the "Touch & Block" principle). As soon as the pressure sensor (22) registers this contact pressure, the control unit shifts one of the directional valves to retract the wheel chock slightly, thereby avoiding a forceful collision. Subsequently, the same valve repositions to gradually reapply pressure in small increments, ensuring gentle but precise contact with minimal clearance around the wheel.

In the illustrated embodiment, additional limit switches (23, 24) can be inserted to detect the end positions of the transverse cylinder (12) or confirm full retraction of the carriage, offering safety interlocks. A variable-speed hydraulic drive (not shown in detail) may also be incorporated to modulate flow rate and approach speed, thus providing a controlled, iterative motion. This arrangement enables the system to sense contact pressure, retract partially, and then re-approach in multiple cycles-resulting in secure wheel blocking without damaging the tire, mudguard, or adjacent vehicle components.

## Claims

1. A wheel-blocking device for immobilising a vehicle at a loading dock, the device comprising:
(a) an elongate guide structure configured to guide a chock carriage along a longitudinal axis adjacent a rear wheel of the vehicle,
(b) a wheel chock mounted on the chock carriage and arranged for transverse movement between a retracted position and a blocking position,
(c) a sensor arranged to detect a position of the vehicle's rear wheel,
(d) a hydraulic drive system arranged to move (i) the chock carriage along the longitudinal axis and (ii) the wheel chock transversely,
(e) a pressure sensor arranged to detect initial contact between the wheel chock and the vehicle's wheel, and
(f) a control unit configured to control said hydraulic drive system, **characterised in that**
(g) the pressure sensor is arranged to trigger at least partial retraction of the wheel chock upon detection of said initial contact, and
(h) the control unit is configured to control said hydraulic drive system so as to iteratively move the wheel chock into contact with the wheel and partially retract the wheel chock until it is positioned closely around the wheel, and to retract the chock carriage longitudinally to press the wheel chock against the wheel, thereby blocking vehicle movement.

2. The device of claim 1, wherein the sensor is configured to detect a lateral edge of the vehicle's wheel.

3. The device of claim 1 or 2, wherein the sensor is mounted behind the wheel chock so as to detect the wheel from a rear side of the chock.

4. The device of any one of the preceding claims, wherein the control unit includes a variable-speed drive that regulates a flow rate of hydraulic fluid for controlling movement of the chock carriage and/or the wheel chock.

5. The device of any one of the preceding claims, further comprising a visible indicator light mounted on or near the chock carriage, the indicator light being configured to display a first color during blocking and a second color when the wheel chock is retracted to permit departure of the vehicle.

6. The device of any one of the preceding claims, wherein the wheel chock has a height of at least 470 mm.

7. The device of any one of the preceding claims, wherein the control unit is programmed to repeat a contact-retraction cycle multiple times until the wheel chock is positioned with minimal clearance around the circumference of the wheel.

8. The device of any one of the preceding claims, further comprising one or more limit switches arranged to detect a transverse end position of the wheel chock.

9. The device of any one of the preceding claims, wherein the elongate guide structure comprises a ground-mounted rail and the chock carriage comprises a housing slidably engaged with said rail.

10. A method of blocking a vehicle's rear wheel at a loading dock, the method comprising the steps of:
(a) providing a longitudinal guide adjacent the vehicle's rear wheel,
(b) moving a carriage along the longitudinal guide so that a wheel chock carried thereby can be positioned opposite the wheel,
(c) detecting an initial contact between the wheel chock and the wheel with a pressure sensor,
**characterised in that the method further comprises**
(d) automatically retracting the wheel chock at least partially upon detecting said contact,
(e) repeating the steps of approaching and partially retracting the wheel chock until it is positioned closely around the wheel, and
(f) moving the carriage longitudinally to press the wheel chock against the wheel, thereby immobilising the vehicle.

11. The method of claim 10, wherein a sensor is used to determine a lateral edge of the wheel, and the movement of the carriage along the longitudinal guide is halted when said sensor signals detection of the wheel.

12. The method of claim 10 or 11, further comprising regulating a flow rate of hydraulic fluid with a variable-speed drive to adjust the approach speed of the wheel chock during the steps of approaching and partially retracting.

13. The method of any one of claims 10-12, wherein a visible indicator light is switched to a first color while the wheel chock is in a blocking position and to a second color when the wheel chock is fully retracted.

14. The method of any one of claims 10-13, further comprising detecting a transverse end position of the wheel chock with a limit switch before pressing the wheel chock against the wheel.

15. The method of any one of claims 10-14, further comprising releasing the vehicle by moving the carriage away from the wheel and retracting the wheel chock transversely until the wheel is free, and then signaling the operator that the vehicle may depart.
